Europäisches Patentamt

European Patent Office

Office européen des brevets

(11) Publication number: **0 414 212 A1**

## EUROPEAN PATENT APPLICATION

(21) Application number: 90116014.3

(22) Date of filing: 21.08.90

(51) Int. Cl.⁵: **D03D 47/12**, D03D 47/27, B29C 67/14

(30) Priority: 24.08.89 FI 893965

(43) Date of publication of application:
**27.02.91 Bulletin 91/09**

(84) Designated Contracting States:
**AT BE CH DE DK ES FR GB GR IT LI LU NL SE**

(71) Applicant: NESTE OY
Keilaniemi
SF-02150 Espoo(FI)

(72) Inventor: Slotte, Stefan
Ristiaallokonkatu 5 B 30
F-02320 Espoo(FI)
Inventor: Patteri, Matti
Hakkurintie 18
F-01680 Vantaa(FI)

(74) Representative: Bühling, Gerhard, Dipl.-Chem.
et al
Patentanwaltsbüro Tiedtke-Bühling-Kinne
Grupe-Pellmann-Grams-Struif Bavariaring 4
D-8000 München 2(DE)

(54) **Method of manufacturing a loom shuttle to a loom and the loom shuttle made by the method.**

(57) The invention is concerned with a method of preparing a shuttle to a loom and a shuttle prepared by the method. The shuttle consists of a composite structure of reinforcing fibers bound by matrix resin, and it is possibly foreseen with a necessary perforation. The shuttle is prepared in the form of a continuous band that is uniform in the longitudinal and transversal directions by drawing continuous reinforcing fibers treated with matrix resin, possibly including discontinuous fibers that give abrasion strength properties, through the form structure and the form and dimensions of the inner surface of the form corresponds to the wished cross section of the shuttle and curing of the matrix resin (23) occurs at the same time.

FIG. 1

# METHOD OF MANUFACTURING A LOOM SHUTTLE TO A LOOM AND THE LOOM SHUTTLE MADE BY THE METHOD

The invention is concerned with a method of manufacturing a loom shuttle and a shuttle made by this method.

In looms it is usual to draw the weft between the beam threads by means of control belts of bendable and flexible material and clips fastened to those. The control belts, which here are called shuttles, are foreseen with a perforation and the alternating movement of the shuttles between the beam threads are carried out with break wheels coupled to these holes.

The abrasion strength, the rigidity and the dimension stability are among the most important properties of the shuttles. The alternating movement of the shuttle against the guides and break wheels cause abrasion and an exact movement of the shuttle requires a high rigidity.

Nowadays the shuttles are made of reinforced plastic by using the so-called prepreg-method. In this technique prepeg-plates are made by impregnation of the reinforcing fibers with resin and by precuring. The precured prepregs are cut in right form and set onto each other between the form halves and hot pressed in connection with which step the resin is cured. In the after-treatment stages bands of wished breadth is sawed from the prepreg-plates which are perforated by punctioning and the bands are cut in their final form.

From the above presented facts it appears that the preparation technique of today includes many stages and that it has many disadvantages. In the first hand the method requires much work and this method is not possible to carry out continuously. With this method it is possible to make shuttles of only one thickness from the same plate and a flexible changing of the cross section of the form is not possible. Furthermore, it is difficult to achieve reinforcing fibers of sufficient concentrations with the prepreg-method, why it is difficult to achieve sufficient strength and rigidity properties.

An object of the invention is to provide a method to prepare a shuttle without the above-presented disadvantages. According to the invention the shuttle can be prepared in the form of a continuous band with a wished thickness and cross section form and higher concentrations of the reinforcing fibers, a better orientation of the fibers and better properties of the fatigue durability can be achieved.

The method of the invention for making a shuttle to a loom, which shuttle, possibly foreseen with a necessary perforation, consists of a composite structure of reinforcing fibers bound by matrix resin, is characterized in that the shuttle is prepared in the form of a continuous band, that is uniform in the longitudinal and transversal directions, by drawing continuous reinforcing fibers treated with current matrix resin, possibly including discontinuous fibers that give abrasion strength properties, through a form structure, the form and dimensions of the inner surface of which correspond to the wished cross section of the shuttle and curing of the matrix resin occurs at the same time.

According to the invention the shuttle is prepared directly with its final cross section form continuously in form of a band that is continuous in the longitudinal direction. By drawing reinforcing fibers treated with currently resin through the form construction, it gives at the same time, as the resin is curing, such a form to the cross section of the band that is exact all over the length of the band. By changning the form construction a flexible changing to products with another cross section can be carried out. In this way a continuous process is achieved and ready fabrics for the shuttles can be cut from a continuous band with the wished form for the cross section.

The invention is also concerned with a shuttle for a loom that is prepared with the above-described method. According to an advantageous embodiment of the invention the reinforcing fibers are fibers of thermoplast. The break elongation of the thermoplastic fibers are higher than that of the usually used glass fibers and thus the using of reinforcing fibers is possible also in the surface layers of the band, where the extension strain and compressing stress are the highest, when the band is bended. Furthermore the use of thermoplast fibers improves the abrasion properties of the shuttle.

The thermoplastic fibers in the shuttle of the invention can advantageously be for example of polyester, polyamide, polyethene, polypropene or polyacrylnitrile. In the method of the invention it is however possible to use any organic or inorganic fibers that can be bound to a composite structure by means of resin.

According to an advantageous embodiment of the invention also powder or interrupted short fiber can be mixed with the plastic matrix to improve the abrasion properties. An advantageous break-fiber for this purpose is aramide fiber pulp or polytetrafluorethene fiber.

The matrix used for bounding of the reinforcing fibers can for instance be of polyester resin or of polyolefine thermoplastic.

The reinforcing fibers are according to an advantageous embodiment of the invention of the same kind of material as the resin used for bounding of the reinforcing fibers. Thus, with the method of the invention, the polyester fibers can be bound by polyester resin.

Furthermore the shuttle of the invention may contain special fibers for regulation of the tensile strength, compressing stress and the longitudinal thermal expansion. Thus it is possible to use carbon fibers inside the band to regulate said properties. Still further, it is possible to regulate the transversal strength properties so that a part of the reinforcement fibers is in woven form whereat the beam threads improve the transversal strength.

The invention is illustrated in the following with reference to the enclosed figures in which

Fig. 1 presents schematically an apparatus to carry out the method of the invention and

Figs 2 and 3 present the construction of a shuttle according to the invention.

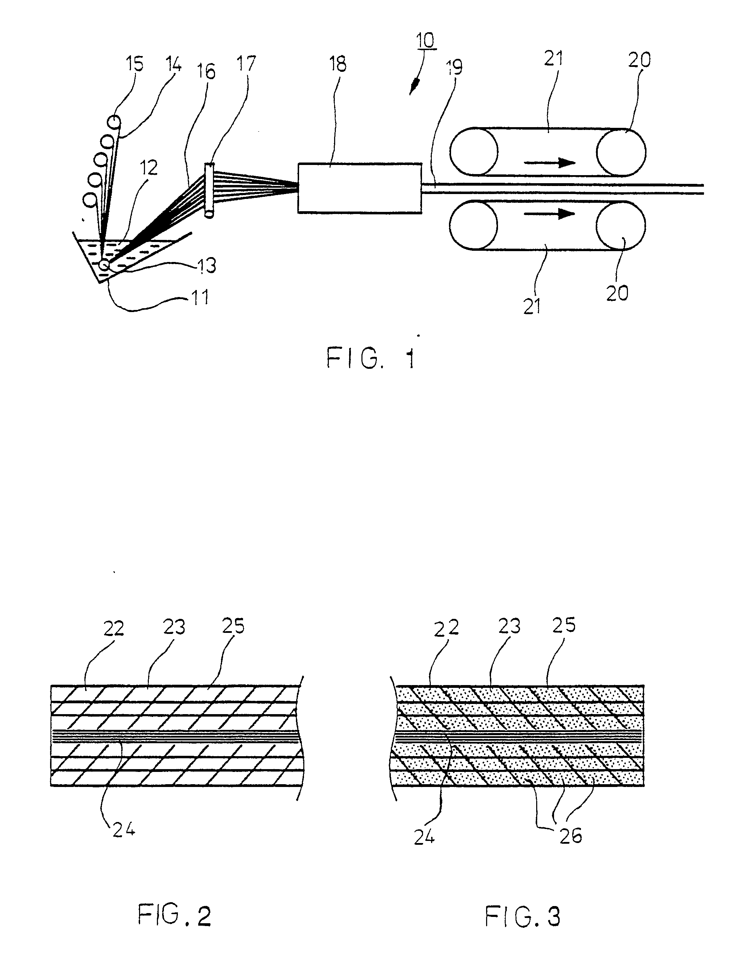

In Fig. 1 the apparatus for preparation of the shuttle of the invention has been presented with reference number 10. In the launder 11 there is current uncured resin 12. Inside the resin 12 there is a roll 13 around which reinforcing fibers 13 are led from coils 15 whereat the fibers will be wet by resin 12. The wet fibers 16 are led from the launder 11 over a guide roll 17 to a curing form 18 in which the resin is cured and a continuous shuttle fabricate 19 with composite structure is formed with the wished form for the cross section. The shuttle fabricate 19 is drawn continuously forward by means of drive belts 21 that runs around drive rolls 20 or with corresponding driving devices. After that shuttles of wished length can be cut from the ready shuttle fabricate band for after treatment purposes, e.g. perforation. If it is wished to make shuttle fabricates with another cross section the curing form 18 can easily be changed.

Fig. 2 presents the construction of the shuttle according to the invention. The reference number 22 presents uniform reinforcing fibers running in the longitudinal direction of the shuttle band which are bound by matrix resin 23. The carbon fibers 24 run in the middle of the band by means of which fibers the thermal expansion of the product can be regulated. The transversal reinforcing fibers have been marked with the reference number 25 which can be formed for example when the reinforcing fibers at least partially are in the form of a woven product.

In Fig. 3 there has furthermore been presented breaked fibers 26 in form of aramide pulp that improve the abrasion strength of the product. The breaked fibers can be added for example to the resin 12 in the launder 11.

The invention is concerned with a method of preparing a shuttle to a loom and a shuttle prepared by the method. The shuttle consists of a composite structure of reinforcing fibers bound by matrix resin, and it is possibly foreseen with a necessary perforation. The shuttle is prepared in the form of a continuous band that is uniform in the longitudinal and transversal directions by drawing continuous reinforcing fibers treated with matrix resin, possibly including discontinuous fibers that give abrasion strength properties, through the form structure and the form and dimensions of the inner surface of the form corresponds to the wished cross section of the shuttle and curing of the matrix resin (23) occurs at the same time.

## Claims

1. Method of preparing a shuttle to a loom, which shuttle, possibly foreseen with a necessary perforation consists of a composite structure of reinforcing fibers bound by matrix resin (23), **characterized** in that the shuttle is prepared in the form of a continuous band that is uniform in the longitudinal and transversal direction by drawing continuous reinforcing fibers (22,25) treated with current matrix resin, possibly including discontinuous fibers that give abrasion strength properties, through the form structure and the form and dimensions of the inner surface of the form corresponds to the wished cross section of the shuttle and curing of the matrix resin (23) occurs at the same time.

2. Shuttle prepared with a method of claim 1, **characterized** in that said reinforcing fibers (22,25) are fibers of thermoplastic.

3. Shuttle of claim 1, **characterized** in that said reinforcing fibers (22,25) are elected from the group of polyester, polyamide, polyethene, polypropene and polyacrylnitrile.

4. Shuttle of claim 2 or 3, **characterized** in that it contains carbon fibers (24) as further reinforcing fibers.

5. Shuttle of claims 2-4, **characterized** in that said breaked fibers (26) are breaked fibers of aramide.

6. Shuttle according to any of the preceding claims, **characterized** in that at least a part of the reinforcing fibers (22,25) are in the form of a woven product.

FIG. 1

FIG. 2

FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | FR-A-2 582 322   (LAMIFLEX)<br>* page 3, line 4 - page 4, line 6; figures 1-2 *<br>— — — | 1-6 | D 03 D 47/12<br>D 03 D 47/27<br>B 29 C 67/14 |
| Y | DE-B-1 187 785   (AUST UND SCHÜTTLER)<br>* column 1, lines 9 - 15 * * column 1, line 47 - column 2, line 26; figure 1 *<br>— — — | 1-6 | |
| A | EP-A-0 125 472   (PHILLIPS PETROLEUM)<br>* page 1, line 12 - page 2, line 1; figure 1 *<br>— — — | 1,4 | |
| A | FR-A-2 532 244   (BORG-WARNER)<br>* page 9, lines 2 - 6 *<br>— — — | 1,5 | |
| A | FR-A-2 592 609   (SOCIETE CHIMIQUE DES CHARBON-NAGES)<br>* page 1, lines 6 - 18 * * page 2, lines 26 - 31 *<br>— — — | 1,6 | |
| A | FR-A-2 357 673   (RUTI S.A.)<br>* claim 1 *<br>— — — — — | 4 | |

| | |
|---|---|
| | TECHNICAL FIELDS SEARCHED (Int. Cl.5) |
| | D 03 D<br>B 29 C |

The present search report has been drawn up for all claims

| Place of search | Date of completion of search | Examiner |
|---|---|---|
| The Hague | 28 November 90 | REBIERE J-L. |